# EUROPÄISCHE PATENTSCHRIFT

(11) **EP 2 592 504 B1**
(45) Veröffentlichungstag und Bekanntmachung des Hinweises auf die Patenterteilung: **31.08.2016**
(21) Anmeldenummer: 12191528.4
(22) Anmeldetag: 07.11.2012
(51) Int. Cl.: G05B 19/042

(54) **Verfahren zur Abschätzung eines Ressourcenverbrauchs bei der Erzeugung eines Steuergeräteprogrammcodes**
Method for estimating resource consumption in the generation of a control device program code
Procédé destiné à évaluer la consommation de ressources lors de la génération d'un code de programme d'appareils de commande

(30) Priorität: 11.11.2011 DE 102011118192; 21.03.2012 DE 102012102373
(43) Veröffentlichungstag der Anmeldung: 15.05.2013
(73) Patentinhaber: dSPACE digital signal processing and control engineering GmbH, 33102 Paderborn (DE)
(72) Erfinder: Trautmann, Wolfgang, 33102 Paderborn (DE)

(56) Entgegenhaltungen:
- C. Ferdinand ET AL: "Combining a High-Level Design Tool for Safety-Critical Systems with a Tool for WCET Analysis on Executables", ERTS 2008 - January 29-31, February 1, 2008 - Toulouse, 1. Februar 2008 (2008-02-01), Seiten 1-10, XP055053471, Gefunden im Internet: URL:http://www.esterel-technologies.com/EN -50128/files/ERTS-2008-Combining-a-High-Le vel-Design-Tool-for-Safety-Critical.pdf [gefunden am 2013-02-14]
- KIRNER R ET AL: "Fully automatic worst-case execution time analysis for matlab/simulink models", REAL-TIME SYSTEMS, 2002. PROCEEDINGS. 14TH EUROMICRO CONFERENCE ON 19-21 JUNE 2002, PISCATAWAY, NJ, USA,IEEE, 19. Juni 2002 (2002-06-19), Seiten 27-36, XP010592735, ISBN: 978-0-7695-1665-3
- WANKANG ZHAO ET AL: "Tuning the WCET of embedded applications", REAL-TIME AND EMBEDDED TECHNOLOGY AND APPLICATIONS SYMPOSIUM, 2004. PR OCEEDINGS. RTAS 2004. 10TH IEEE TORONTO, CANADA 25-28 MAY 2004, PISCATAWAY, NJ, USA,IEEE, 25. Mai 2004 (2004-05-25), Seiten 472-481, XP010711315, DOI: 10.1109/RTTAS.2004.1317294 ISBN: 978-0-7695-2148-0
- WEHMEYER L ET AL: "Influence of Memory Hierarchies on Predictability for Time Constrained Embedded Software", DESIGN, AUTOMATION AND TEST IN EUROPE, 2005. PROCEEDINGS MUNICH, GERMANY 07-11 MARCH 2005, PISCATAWAY, NJ, USA,IEEE, 7. März 2005 (2005-03-07), Seiten 600-605, XP010780029, ISBN: 978-0-7695-2288-3
- BYHLIN S ET AL: "Applying Static WCET Analysis to Automotive Communication Software", REAL-TIME SYSTEMS, 2005. (ECRTS 2005). PROCEEDINGS. 17TH EUROMICRO CON FERENCE ON PALMA DE MALLORCA, BALEARIC ISLANDS, SPAIN 06-08 JULY 2005, PISCATAWAY, NJ, USA,IEEE, 6. Juli 2005 (2005-07-06), Seiten 249-258, XP010835784, ISBN: 978-0-7695-2400-9

## Beschreibung

Die vorliegende Erfindung betrifft ein Verfahren zur Abschätzung eines Ressourcenverbrauchs an Speicherplatz und/oder benötigter Laufzeit eines für ein Steuerungsprogramm zu erzeugenden Steuergeräteprogrammcodes gemäß dem Oberbegriff des Patentanspruchs 1.

Steuerungs- oder Regelungsprogramme - im Folgenden Steuerungsprogramme genannt werden - werden beispielsweise für Steuergeräte in der Automobilindustrie oder der Flugzeugindustrie entwickelt.
Steuergeräte mit Steuerungsprogrammen finden Verwendung unter anderem beim Steuern von Aktuatoren, Überwachen komplexer Vorgänge, Erfassen und Verarbeiten einer Vielzahl von Werten von Umgebungsdaten und/oder von Benutzereingaben.
Steuerungsprogramme enthalten Funktionen, mit denen Eingangswerte oder Eingangssignale verarbeitet werden, wie etwa Daten aus Sensorsignalen und / oder Benutzereingaben. Entsprechende Ausgangswerte oder Ausgangssignale werden dann von den Steuerungsprogrammen beispielsweise zur Steuerung von Aktuatoren in Prozessen ausgegeben.

Durch die wachsende Anzahl an implementierten Funktionen nimmt die Komplexität der Steuerungsprogramme für Steuergeräte, etwa in Automobilen, zu.

Insbesondere bei der Erweiterung von Steuerungsprogrammen mit neuen Funktionen für ein Steuergerät wird typischerweise der Speicherbedarf für den auszuführenden Steuergeräteprogrammcode erhöht und übersteigt oft den zur Verfügung stehenden Speicherplatz. Auch neu entworfene Systeme unterliegen häufig harten Ressourcenbeschränkungen.
Des Weiteren ist eine Anforderung an den Steuergeräteprogrammcode, dass insbesondere zeitkritische Steuerungsaufgaben in der gebotenen Ausführungszeit abgearbeitet werden.

Aus diesem Grund ist es notwendig den Steuergeräteprogrammcode bezüglich seines Ressourcenverbrauchs, z.B. an Speicherplatz oder Laufzeit, durch optimale Einstellung verschiedener möglicher Optimierungsparameter zu optimieren. Werkzeuge zur Optimierung von bereits vorliegendem Steuergeräteprogrammcode bietet beispielsweise die Firma Absint (www.absint.com) an.

Zur Entwicklung der Steuerungsprogramme werden zunehmend modellbasierte Entwicklungswerkzeuge, wie z.B. Simulink von The Mathworks, ASCET von Etas oder Labview von National Instruments verwendet.
Diese ermöglichen es, die Funktionalität des Steuerungsprogramms zunächst graphisch, in Form von ausführbaren Modellen zu spezifizieren.
Mit ausführbar ist hier gemeint, dass dem Modell Eingabewerte in Form von Parametern oder Variablen o.ä. vorgegeben werden können und dass von dem Modell, wenn es ausgeführt wird, Ausgabewerte in Form von Parametern oder Variablen o.ä. erzeugt werden.
Die Spezifikation der Funktionalität erfolgt bei solchen Modellen auf einer höheren Abstraktionsebene als eine Spezifikation auf der Ebene von textuellem Software Code wie etwa C-Code. Dies ermöglicht einerseits eine bessere Übersichtlichkeit über die Funktionalität des Steuerungsprogramms, andererseits lassen sich solche Modelle besser wiederverwerten, da sie aufgrund des höheren Abstraktionsniveaus allgemeineren Charakter haben und noch nicht auf eine konkrete Weise der Implementierung und/oder der Programmierung festgelegt sind. Die Möglichkeit der Wiederverwertung ausführbarer Modelle - auch durch verschiedene Entwickler - spart kostspielige Entwicklungszeit.

Eine Festlegung der Implementierung ergibt sich beispielsweise durch die Vorgabe, wie eine Funktion des Steuerungsprogramms in den Steuergeräteprogrammcode eingebunden ist, z.B. ob sie direkt eingebunden ist oder in Form eines Unterprogramms aufzurufen ist.

Weitere Vorteile bei der Verwendung modellbasierter Entwicklungswerkzeuge ergeben sich zum einen dadurch, dass die Funktionalität der Modelle schon auf einer hohen Abstraktionsebene getestet werden kann, d.h. das Modell kann in sogenannten "model-in-the-loop"-Tests ausgeführt und auf Fehler überprüft werden.
Zum anderen kann auf Basis eines solchen Modells von einem Codegenerator automatisch ein Steuergeräteprogrammcode für das Steuerungsprogramm erzeugt werden. Dies ist beispielsweise C-Code, der auf einem Steuergeräte-Prozessor ablaufen kann oder etwa VHDL Code für einen FPGA oder ASIC.

Da das Testen von Programmeigenschaften, bzw. von Eigenschaften des Steuergeräteprogrammcodes, umso mehr Zeitersparnis bringt, je früher es in der Entwicklung des Steuergeräteprogramms durchgeführt werden kann, werden in den Fachartikeln "Combining a High-Level Design Tool for safety-Critical Systems with a Tool for WCET Analysis on Executables" von C. Ferdinand et al. und "Fully Automatic Worst-Case Execution Time Analysis for Matlab/Simulink Models" von R. Kirner et al. Systeme vorgestellt, die modellbasierte Entwicklungsumgebungen mit Werkzeugen zur Optimierung von bereits vorliegendem Steuergeräteprogrammcode kombinieren. Gemäß dieser Fachartikel werden optimierungsrelevante Informationen in einem ausführbaren Modell hinterlegt, aus welchem automatisch ein Steuergeräteprogrammcode erzeugt wird. Basierend auf diesem Steuergeräteprogrammcode werden von dem entsprechenden Optimierungswerkzeug der Speicherplatzverbrauch und/oder die Laufzeit des ausführbaren Steuergeräteprogrammcodes abgeschätzt.

Bei der Erzeugung von Steuergeräteprogrammcode wird das ursprüngliche Modell üblicherweise in eine oder mehrere intermediäre Programmcoderepräsentationen transformiert. Die Programmcoderepräsentationen dienen dazu, Optimierungen vorzunehmen, wie z.B. Funktionsvariablen zusammenzufassen oder zu eliminieren.

Die Erzeugung des Steuergeräteprogrammcodes aus einem Modell für ein Steuerungsprogramm kann aufgrund sehr langer und komplexer Steuerungsprogramme und umfangreicher Steuerungsfunktionen jedoch extrem zeitaufwändig sein.

Um einen Steuergeräteprogrammcode gemäß einer Zielvorgabe bezüglich seines Ressourcenverbrauchs an z.B. Speicherplatz oder Laufzeit zu optimieren, ist es meist erforderlich den Steuergeräteprogrammcode mehrfach mit jeweils unterschiedlichen Einstellungen von Optimierungsparametern zu generieren.
Andererseits ist es aus Zeitmangel oft nicht möglich, mehrfach den zeitaufwändigen Prozess der Erzeugung des Steuergeräteprogrammcodes zu durchlaufen. Dies führt dazu, dass die Optimierungsparameter für den endgültigen Steuergeräteprogrammcode nicht optimal eingestellt sind.

Der Erfindung liegt die Aufgabe zu Grunde, den Stand der Technik weiterzubilden, bzw. ein Verfahren bereitzustellen, das eine schnellere Ermittlung von Schätzwerten für den Ressourcenverbrauch eines noch zu erzeugenden Steuergeräteprogrammcodes ermöglicht.

Die Aufgabe wird durch ein Verfahren zur Abschätzung eines Ressourcenverbrauchs von Speicherplatzbedarf und/oder benötigter Laufzeit eines Steuergeräteprogrammcodes für ein Steuerungsprogramm bei der Erzeugung des Steuergeräteprogrammcodes mit den Merkmalen des Anspruchs 1 gelöst. Vorteilhafte Weiterbildungen sind Gegenstand von Unteransprüchen.

Gemäß dem Gegenstand der Erfindung ist ein Verfahren zur Abschätzung eines Ressourcenverbrauchs von Speicherplatzbedarf und/oder benötigter Laufzeit eines Steuergeräteprogrammcodes für ein Steuerungsprogramms bei der Erzeugung des Steuergeräteprogrammcodes angegeben.
Die Funktionalität des Steuerungsprogramms ist in einem mit einer Modellierungssoftware erstellten ausführbaren Modell vorgegeben. Das Modell weist mindestens eine Funktion mit einer Anzahl von ersten Funktionsgrößen und ersten den ersten Funktionsgrößen zugeordneten Informationen auf und umfasst Optimierungsparameter zur Festlegung von Optimierungseinstellungen für einen Codegenerator. Wenigstens für einen die Funktion umfassenden Teil des Modells wird von dem Codegenerator unter Berücksichtigung erster Werte der Optimierungsparameter eine erste Programmcoderepräsentation erzeugt, wobei die erste Programmcoderepräsentation eine Anzahl von zweiten Funktionsgrößen und den zweiten Funktionsgrößen zugeordnete Informationen aufweist. Die erste Programmcoderepräsentation wird mittels Transformationsvorschriften aus dem ausführbaren Modell erzeugt. Erfindungsgemäß ist eine Abschätzeinheit vorgesehen, die ein Ressourcenmodell mit einer Anzahl von Hardware beschreibenden Parametern umfasst, wobei von der Abschätzeinheit unter Berücksichtigung der Hardware beschreibenden Parameter und basierend auf der ersten Programmcoderepräsentation ein erster Speicherplatzbedarf-Schätzwert für den Steuergeräteprogrammcode und/oder ein erster Laufzeit-Schätzwert für den Steuergeräteprogrammcode ermittelt wird. Der erste Speicherplatzbedarf-Schätzwert und/oder der erste Laufzeit-Schätzwert werden/wird in einem ersten Speicherbereich abgespeichert und/oder auf einer Anzeigevorrichtung, insbesondere in dem ausführbaren Modell, angezeigt.

Da der Codegenerator nicht den vollständigen Prozess der Codegenerierung für den Steuergeräteprogrammcode durchläuft, sondern nur eine erste vorläufige Programmcoderepräsentation erzeugt, wird durch das erfindungsgemäße Verfahren sehr schnell ein Schätzwert für einen Ressourcenverbrauch ermittelt. Die Ermittlung eines solchen Schätzwertes bringt eine deutliche Zeitersparnis mit sich im Vergleich zur Bestimmung eines oder mehrerer tatsächlicher, absoluter Werte für den Ressourcenverbrauch anhand eines neu zu erzeugenden Steuergeräteprogrammcodes.

Bevorzugt ist die Abschätzeinheit als Teilprogramm des Codegenerators ausgebildet.

Bevorzugt wird mindestens eine Bedingung bezüglich des Ressourcenverbrauchs vorgegeben. Von der Abschätzeinheit wird anhand der vorgegebenen Bedingung und in Abhängigkeit des erstes Speicherplatzbedarf-Schätzwerts und/oder in Abhängigkeit des ersten Laufzeit-Schätzwertes abgeschätzt, ob der zu erzeugende Steuergeräteprogrammcode die vorgegebene Bedingung erfüllt und gemäß dem Ergebnis der Abschätzung angezeigt, dass der zu erzeugende Steuergeräteprogrammcode die vorgegebene Bedingung erfüllt oder angezeigt dass der zu erzeugende Steuergeräteprogrammcode die vorgegebene Bedingung nicht erfüllt.

Vorzugsweise wird von der Abschätzeinheit der erste Speicherplatzbedarf-Schätzwert aus dem Wert für den benötigten Speicherplatz für die zweiten Funktionsgrößen der ersten Programmcoderepräsentation ermittelt. Allgemein wird ein Speicherplatzbedarf-Schätzwert aus dem Wert für den benötigten Speicherplatz für die Funktionsgrößen der entsprechenden Programmcoderepräsentation ermittelt, z.B. durch Ermittlung der Anzahl der Funktionsgrößen. Wieviel Speicherplatz eine Funktionsgröße benötigt ist üblicherweise bekannt. Auf diese Weise wird eine einfache erste Abschätzung erhalten.

Vorzugsweise wird durch einen Speicherplatzbedarf-Schätzwert eine Abschätzung für den Speicherplatzbedarf in einem RAM-Speicher oder in einem ROM-Speicher oder in einem Stapelspeicher gegeben.

In einer vorteilhaften Ausführungsform wird unter Berücksichtigung von zweiten den ersten Funktionsgrößen zugeordneten Informationen und/oder unter Berücksichtigung zweiter Werte für die Optimierungsparameter eine zweite Programmcoderepräsentation erzeugt. Die zweite Programmcoderepräsentation wird bevorzugt mittels derselben Transformationsvorschriften aus dem ausführbaren Modell erzeugt wie die erste Programmcoderepräsentation. Basierend auf der zweiten Programmcoderepräsentation und/oder unter Berücksichtigung von zweiten Werten der Hardware beschreibenden Parameter wird für den Steuergeräteprogrammcode ein zweiter Speicherplatzbedarf-Schätzwert und/oder ein zweiter Laufzeit-Schätzwert ermittelt. Der zweite Speicherplatzbedarf-Schätzwert und/oder der zweite Laufzeit-Schätzwert werden/wird in einem zweiten Speicherbereich abgespeichert und/oder auf einer Anzeigevorrichtung, insbesondere in dem ausführbaren Modell, angezeigt.

Mittels des erfindungsgemäßen Verfahrens werden somit in kurzer Zeit mehrere Schätzwerte (Speicherplatzbedarf- und/oder Laufzeit-Schätzwert) in Abhängigkeit der eingestellten Optimierungsparameter, der Hardware beschreibenden Parameter und/oder der den ersten Funktionsgrößen zugeordneten Informationen ermittelt und zur Verfügung gestellt. Vorzugsweise wird anhand der Schätzwerte entschieden, auf welche Weise der Steuergeräteprogrammcode für das Steuerungsprogramm zu implementieren ist.

Bevorzugt wird von der Abschätzeinheit in Abhängigkeit des erstes Speicherplatzbedarf-Schätzwerts und/oder des zweiten Speicherplatzbedarf-Schätzwerts und/oder in Abhängigkeit des ersten Laufzeit-Schätzwertes und/oder des zweiten Laufzeit-Schätzwerts und anhand der vorgegebenen Bedingung bezüglich des Ressourcenverbrauchs eine Entscheidung getroffen, dass der Steuergeräteprogrammcode mittels des Codegenerators entweder unter Berücksichtigung der ersten den ersten Funktionsgrößen zugeordneten Informationen oder unter Berücksichtigung der zweiten den ersten Funktionsgrößen zugeordneten Informationen und/oder unter Berücksichtigung der ersten Werte der Optimierungsparameter oder unter Berücksichtigung der zweiten Werte der Optimierungsparameter erzeugt wird.

Vorzugsweise wird für die Entscheidung welche Informationen und/oder Optimierungsparameter für die Codeerzeugung zu berücksichtigen sind von der Abschätzeinheit unter Berücksichtigung der vorgegebenen Bedingung ein Vergleich des erstes Speicherplatzbedarf-Schätzwertes mit dem zweiten Speicherplatzbedarf-Schätzwert und/oder ein Vergleich des ersten Laufzeit-Schätzwertes mit dem zweiten Laufzeit-Schätzwert vorgenommen, um die optimale Implementierung zu ermitteln. Der Vergleich der Schätzwerte bezüglich unterschiedlicher Programmcoderepräsentationen unterstützt die Optimierung des zu erzeugenden Steuergeräteprogrammcodes. Die Berücksichtigung der vorgegebenen Bedingung erfolgt beispielsweise durch einen weiteren Vergleich mit einem vorgegebenen Schwellwert.

Vorzugsweise ist die Bedingung bezüglich des Ressourcenverbrauchs durch einen Wert eines Hardware beschreibenden Parameters und/oder durch einen Wert eines Optimierungsparameters gegeben, wobei durch den Hardware beschreibenden Parameter und/oder den Optimierungsparameter festgelegt wird, dass der Steuergeräteprogrammcode eine obere Schranke für den Speicherplatzbedarf des Steuergeräteprogrammcodes oder eine obere Schranke für die Laufzeit des Steuergeräteprogrammcodes nicht überschreiten darf und/oder dass der Steuergeräteprogrammcode bezüglich des Speicherplatzbedarfs oder bezüglich der Laufzeit zu optimieren ist. In einer möglichen Ausführungsform wird sowohl eine obere Schranke für den Speicherplatzbedarf als auch eine obere Schranke für die Laufzeit vorgegeben.

In einer Ausführungsform der Erfindung sind die Hardware beschreibenden Parameter in dem ausführbaren Modell hinterlegt bzw. dem ausführbaren Modell oder dem die Funktion umfassenden Teil des ausführbaren Modells zugeordnet, wobei von der Abschätzeinheit auf die Parameter in dem ausführbaren Modell zugegriffen wird.
Dadurch, dass das Modell die Optimierungsparameter und/oder die Hardware beschreibenden Parameter umfasst, werden wichtige Informationen für eine optimierte Codegenerierung bezüglich bestimmter Zielvorgaben auf einem hohen Abstraktionsniveau hinterlegt. Vorteilhafter Weise werden somit bei einer Wiederverwertung des Modells diese wichtigen Informationen weitergegeben, was wiederum eine Zeitersparnis für den Entwicklungsprozess eines Steuergerätes bedeutet.

In einer beispielhaften Ausführungsform wird der Funktion ein Funktionsoptimierungsparameter zugeordnet. In Abhängigkeit des Wertes des Funktionsoptimierungsparameters werden bei der Erzeugung des Steuergeräteprogrammcodes Programmanweisungen für die Funktion unmittelbar in den Steuergeräteprogrammcode eingebunden oder alternativ mittels eines Unterprogrammaufrufs in den Steuergeräteprogrammcode eingebunden.
Einerseits ist es vorteilhaft, für sehr schnell auszuführende Steuerungsaufgaben,
bzw. -funktionen, die einer Funktion zugeordneten Programmzeilen unmittelbar an der Stelle in das Steuerungsprogramm einzubinden, wo die Funktion benötigt
wird, denn dadurch lassen sich nicht nur zeitraubende Funktionsaufrufe ersparen,
es bieten sich oft auch weitere Optimierungsmöglichkeiten, z.B. zur Einsparung
von Zwischenvariablen. Anderseits wird bei mehrmaliger Verwendung der Funktion an unterschiedlichen Stellen des Steuerungsprogramms die Gesamtlänge des Steuerungsprogramms und damit der Speicherverbrauch für das auszuführende Programm deutlich erhöht. Um den Bedarf an Speicherplatz möglichst gering zu halten, ist es wünschenswert, gerade die Programmzeilen der häufig aufgerufenen Funktionen als Unterprogramme einzubinden und die Unterprogramme per Sprung und Rücksprung abzuarbeiten. Hierdurch wird jedoch die Ausführungszeit des Steuerungsprogramms für die Funktion verlängert, unter anderem durch Kopiervorgänge zur Übergabe von Variablen der Funktion.

In einer weiteren Ausführungsform der Erfindung wird ein dritter Speicherplatzbedarf-Schätzwert und/oder ein dritter Laufzeit-Schätzwert in Abhängigkeit einer dritten Programmcoderepräsentation ermittelt, wobei die dritte Programmcoderepräsentation durch Transformation aus der ersten Programmcoderepräsentation und/oder aus der zweiten Programmcoderepräsentation erzeugt wird. Die dritte Programmcoderepräsentation weist in der Regel ein geringeres Abstraktionsniveau auf, bzw. steht der konkreten Ausführung des Steuergeräteprogrammcodes bereits näher als die erste und/oder die zweite Programmcoderepräsentation. Auf Basis der dritten Programmcoderepräsentation wird somit ein realistischerer Schätzwert ermittelt.

In einer anderen Ausgestaltungsform wird mittels des Codegenerators entschieden, ob der Schätzwert auf der Basis der ersten, der zweiten oder der dritten Programmcoderepräsentation ermittelt wird.

Vorzugsweise wird von der Abschätzeinheit in Abhängigkeit der vorgegebenen Bedingung bezüglich des Ressourcenverbrauchs und basierend auf der Anzahl der zweiten Funktionsgrößen und/oder basierend auf den den zweiten Funktionsgrößen zugeordneten Informationen ein Vorschlag zur Änderung des ausführbaren Modells des Steuerungsprogramms ermittelt. Beispielsweise umfasst der Vorschlag eine Änderung der Werte der Optimierungsparameter, insbesondere eine Änderung des Funktionsoptimierungsparameters.

Äußerst bevorzugter Weise wird dieser Vorschlag dem Benutzer angezeigt.

Vorzugsweise ist der Wert eines Hardware beschreibenden Parameters durch den Wert einer Registerbreite eines Prozessors oder die Anzahl der Datenregister des Prozessors oder einen Gewichtungsfaktor für die Anzahl der erforderlichen Prozessortakte für die Durchführung einer Rechenoperation durch den Prozessor gegeben. Auf diese Weise werden die Ressourcen der Recheneinheit charakterisiert, auf der das letztendlich zu erzeugende Steuergeräteprogramm ausgeführt werden soll. Diese Ressourcen-Kennwerte werden bei der Abschätzung von Schätzwerten durch die Abschätzeinheit berücksichtigt.

Vorteilhafter Weise umfassen die den Funktionsgrößen zugeordneten Informationen Informationen zum Typ der Funktionsgrößen, wie etwa die Werte-Typen "integer", "float" o.ä. und/oder die den Funktionsgrößen zugeordneten Informationen umfassen Informationen, die festlegen, dass der Wert einer Funktionsgröße während der Laufzeit des Steuergeräteprogrammcodes ausgelesen wird oder nicht ausgelesen wird.

In einer vorteilhaften Ausführungsform wird der erste Laufzeit-Schätzwert von der Abschätzeinheit durch Abschätzung der Anzahl der benötigten Prozessortakte mittels des Gewichtungsfaktors bestimmt.

Gemäß der Erfindung ist eine Programmcoderepräsentation als Kontrollflussgraph und/oder als Datenflussgraph und/oder als Baumstruktur ausgeprägt.

Das erfindungsgemäße Verfahren wird nachfolgend anhand der Ausführungsbeispiele im Zusammenhang mit den schematisierten Zeichnungen
erläutert. Hierbei sind funktionsgleiche Merkmale mit denselben Bezugszeichen versehen. Es zeigen, die Figur 1: eine schematische Darstellung einer Ausführungsform des erfindungsgemäßen Verfahrens; Figur 2: eine schematische Darstellung einer weiteren Ausführungsform des erfindungsgemäßen Verfahrens; Figur 3: eine beispielhafte Modellierung von Funktionen in einem ausführbaren Modell; Figur 4: beispielhafte Programmcoderepräsentationen für Funktionen in einem Modell; Figur 5a: weitere beispielhafte Programmcoderepräsentationen; Figur 5b: Steuergeräteprogrammcode entsprechend der Programmcoderepräsentation aus Fig. 5a; Figur 6a: weitere beispielhafte Programmcoderepräsentationen; Figur 6b: Steuergeräteprogrammcode entsprechend der Programmcoderepräsentation aus Fig. 6a.

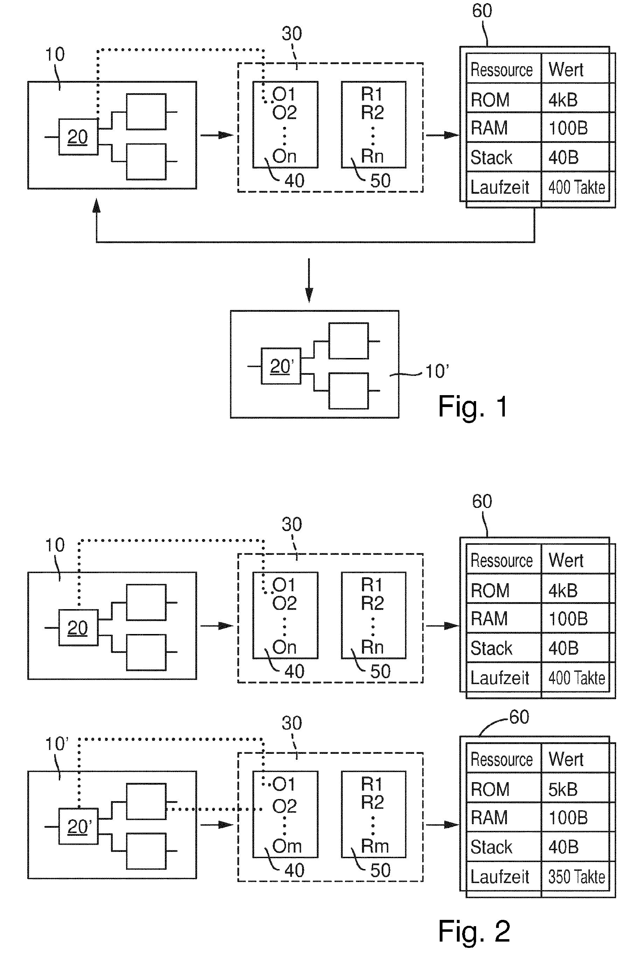

Die Figur 1 ist eine schematische Darstellung einer Ausführungsform des erfindungsgemäßen computerimplementierten Verfahrens. Ein Computersystem, auf welchem das Verfahren abläuft, ist nicht explizit dargestellt. Zur Durchführung des Verfahrens liegen auf dem Computersystem ein mit einer Modellierungssoftware erstelltes ausführbares Modell 10 mit einer Funktion 20, eine Abschätzeinheit 30 und eine Anzeigevorrichtung 60 vor. Das Modell 10 ist als Blockdiagramm dargestellt. In dem Modell 10 oder assoziiert mit dem Modell 10 oder mit Teilen des Modells 10 sind Optimierungsparameter 01, 02,..., On vorgehalten. In Figur 1 ist
durch eine gestrichelte Linie angedeutet, dass der Optimierungsparameter O1 mit der Funktion 20 assoziiert ist. Die Optimierungsparameter O1, O2,..., On legen Optimierungseinstellungen für einen Codegenerator fest. Die Abschätzeinheit 30 hat Zugriff auf bzw. umfasst ein Ressourcenmodell 50. Das Ressourcenmodell 50 beschreibt die Hardwareressourcen des Rechnersystems - auch Target oder Zielplattform genannt - auf dem der zu erzeugende Steuergeräteprogrammcode für ein Steuerungsprogramm ausgeführt werden soll mittels Hardware beschreibender Parameter R1, R2, ...Rn. Der Pfeil zwischen dem Modell 10 und der Abschätzeinheit 30 deutet an, dass mindestens für einen Teil des Modells 10 von einem Codegenerator eine (in Fig.1 nur grob angedeutete) erste Programmcoderepräsentation 40 unter Berücksichtigung der Optimierungsparameter O1, O2,..., On erzeugt wird. Basierend auf dem Ressourcenmodell 50 und auf der ersten Programmcoderepräsentation 40 werden von der Abschätzeinheit 30 in diesem Beispiel verschiedene Speicherplatzbedarf-Schätzwerte und ein Laufzeit-Schätzwert ermittelt und auf einer Anzeigevorrichtung 60 angezeigt. Die angezeigten Schätzwerte werden in einem ersten Speicherbereich gespeichert und in dem ausführbaren Modell 10 hinterlegt. Somit wird durch das erfindungsgemäße Verfahren ein mit solchen Informationen angereichertes ausführbares Modell 10' erhalten. Beispielsweise umfasst das Modell 10'- z.B. auf Vorschlag der Abschätzeinheit - geänderte Optimierungsparameter O' 1, O'2,..., O'm.

Figur 2 zeigt eine weitere Ausführungsform der Erfindung, wobei das gemäß Fig. 1 beschriebene Verfahren zweimal ausgeführt wird; einmal mit den Optimierungsparametern O1, O2,..., On und in einem weiteren Durchlauf mit dem Modell 10' und den Optimierungsparametern O1', O2',..., O'm und eventuell auch geänderten Ressourcenparametern R'1, R'2, ..R'n. Die in den beiden Durchläufen erhaltenen Schätzwerte können verglichen werden.

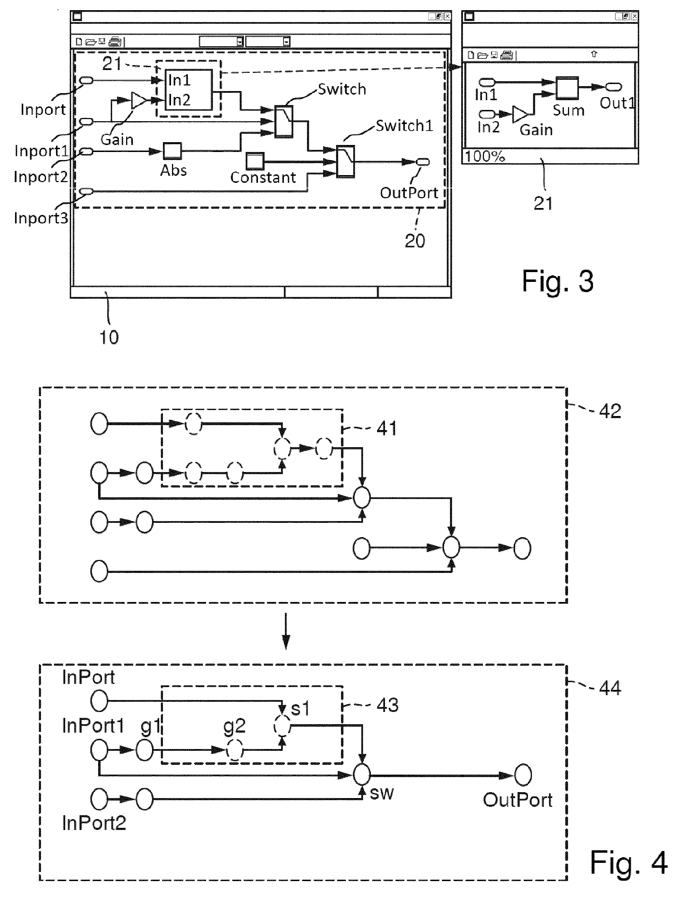

Figur 3 zeigt ein Beispiel eines mittels einer Modellierungssoftware erstellten ausführbaren Modells 10, das eine Funktion 20 mit Funktionsblöcken und Verbindungslinien umfasst. Die Funktionsblöcke (im Folgenden auch nur als Blöcke bezeichnet) stehen z.B. für Operationen, die an Signalen, d.h. Funktionsgrößen, durchgeführt werden. Die Verbindungslinien definieren den Datenfluss der Signale von links nach rechts. Die Funktion 20 weist vier Signaleingänge, InPort, InPort1, InPort2 und InPort3, auf. Außerdem umfasst die Funktion 20 eine Unterfunktion 21. Die Unterfunktion 21 ist in dem Modell 10 mittels eines Subsystem-Blocks mit Signaleingängen In1 und In2 sowie Signalausgang Out1 modelliert. Der Signaleingang InPort ist mit dem Eingang In1 des Subsystem-Blocks verbunden. Signaleingang InPort1 ist mit Signaleingang In2 über einen sogenannten Verstärker-Block "Gain" mit dem Verstärkungsfaktor 2 verbunden. In dem Block "Gain" wird das eingehende Signal mit dem Verstärkungsfaktor multipliziert. Der Wert von Signaleingang InPort1 liegt bei Ausführung des Modells somit multipliziert mit dem Faktor 2 an Signaleingang In2 an. Signaleingang InPort1 ist weiterhin mit dem mittleren Eingang eines Schalter-Blocks "Switch" verbunden. Der Schalterblock "Switch" ist (in Fig. 3 nicht ersichtlich) so eingestellt, dass falls der Wert von InPort1 größer oder gleich 5 ist, der obere Eingang des Blocks "Switch" aktiviert ist, falls der Wert von InPort1 kleiner als 5 ist, der untere Eingang des Blocks "Switch" aktiviert ist. Der untere Eingang des Blocks "Switch" erhält als Eingangssignal das aus dem Block "Abs" austretende Signal, nämlich den Betrag des Wertes aus dem Signaleingang "InPort2". Funktion 20 weist einen weiteren Schalter-Block, "Switch1" auf. Der Schalterblock "Switch1" ist (in Fig. 3 nicht ersichtlich) so eingestellt, dass falls der Wert des am mittleren Eingang anliegenden Signals größer als Null ist, der obere Eingang des Blocks "Switch1" aktiv ist, andernfalls der untere Eingang des Blocks "Switch1". Da an dem mittleren Eingang ein Konstanten-Block mit dem konstanten Wert 1 anliegt, ist in diesem Fall immer der obere Eingang aktiv.

Der Inhalt des Subsystems, d.h. hier die Unterfunktion 21, ist dem Subsystem-Block hinterlegt. Der Inhalt ist in der Figur 3 rechts dargestellt und weist mehrere Funktionsblöcke auf, die insgesamt die Funktionalität der Unterfunktion 21 modellieren. Unterfunktion 21 berechnet aus den zwei Eingangssignalen, In1 und In2, ein Ausgangssignal, Out1. In2 wird mit einem Faktor 2 multipliziert. Die Multiplikation ist wieder durch einen Block "Gain" dargestellt. Der resultierende Wert der Multiplikation wird zu In1 addiert, wodurch sich der Wert von Out1 ergibt.

Der obere Teil der Fig. 4 zeigt eine mögliche Programmcoderepräsentation in Form eines gemischten Daten- und Kontrollflussgraphen 42. Der Graph 42 ist eine schematische Darstellung der Funktion 20, wie sie im Zuge der Codegenerierung von einem Codegenerator erstellt wird. Die Funktionsblöcke und Verbindungslinien werden zunächst als Knoten und Kanten dargestellt, weitere konnotierte Informationen, z.B. Optimierungsinformationen in Form von hinterlegten Optimierungsparamtern, sind in Fig. 4 nicht abgebildet. Die Unterfuntkion 21 ist im oberen Teil der Fig. 4 ebenfalls als Teil-Graph 41 dargestellt. Die Knoten in den Graphen 42 und 41 symbolisieren Operationen, die Verbindungslinien (Kanten) zeigen den Datenfluss an. Für alle Knoten sind zunächst einmal von dem Codegenerator Größen als Ausgangsgrößen einer Operation vorgesehen. Für den in Fig.4 aufgeführten Graphen 42 würden ohne weitere Transformationen von einem Codegenerator fünfzehn Funktionsgrößen angelegt, da auch für die Eingänge des Subsystem-Blocks aus dem Modell 10 Knoten dargestellt werden. Um jedoch keinen überflüssigen Code zu erzeugen, werden zu Optimierungszwecken Transformationen auf der Basis der vorliegenden Informationen durchgeführt. Diese führen zu einer weiteren Programmcoderepräsentation 44 für die Funktion 20, die eine Programmcoderepräsentation 43 der Unterfuntkion 21 beinhaltet. Die Programmcoderepräsentationen 43 und44 sind im unteren Abschnitt der Fig. 4 aufgeführt. Es zeigt sich, dass etliche Knoten und damit auch Funktionsgrößen, d.h. Variablen, durch die Transformation eliminiert werden. Um den Zusammenhang zu den Signalen im Modell 10 darzustellen sind im unteren Teil der Fig.4 die Namen von Ausgangsgrößen von Knoten angezeigt, ebenso sind Namen für Hilfsgrößen, g1, g2, s1 und sw, angegeben, die der Codegenerator bei der Erzeugung von Steuergeräteprogrammcode für die Programmcoderepräsentationen 42 und 44 anlegen würde. Eliminationen werden in diesem Beispiel bei der Transformation vom Graphen 42 zu der Programmcoderepräsentation 44 aufgrund der Information vorgenommen, dass bei dem in Fig. 3 aufgeführten Schalter-Block "Switch1" der untere Eingang stets inaktiv und damit überflüssig ist. Auch werden die Übergabegrößen zwischen der Funktion 20 und der Unterfunktion 21 eingespart. Insgesamt sind somit für den Programmcode nur noch neun statt fünfzehn Funktionsgrößen vorgesehen. Anhand der Anzahl der Funktionsgrößen der Programmcoderepräsentation 44 kann eine erste Abschätzung für den Speicherplatzbedarf vorgenommen werden. Anhand der aufgeführten Operationen in Verbindung mit der Information wie viele Prozessortakte eine Operation benötigt, erfolgt die Bestimmung eines Laufzeit-Schätzwertes.

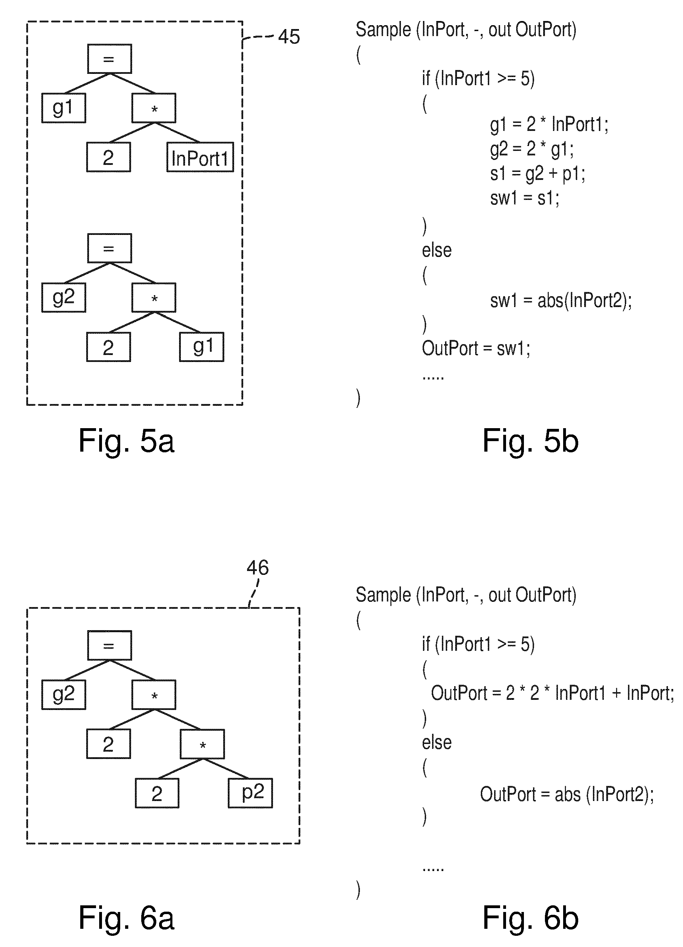

Figur 5a zeigt eine weitere Programmcoderepräsentation 45 für einen Teil der Funktion 20 und einen Teil der Unterfunktion 21 in Form allgemein üblicher Baumstrukturen. Abgebildet ist exemplarisch die aus mehreren Transformationen hervorgegangene Darstellung für die Multiplikationsoperation sowohl des Blocks "Gain" aus der Funktion 20 des Modells 10 als auch des Blocks "Gain" aus der Unterfunktion 21 des Modells 10.
Figur 5b zeigt, einen Steuergeräteprogrammcode für die Funktion 20, der dem Abstrahierungsniveau der Baumstrukturen aus Fig. 5a entspricht.

Es ist dem Codegenerator auf Basis der Baumstrukturdarstellung jedoch möglich noch weitere Transformationen zur Optimierung des Steuergeräteprogrammcodes durchzuführen. Beispielsweise werden sogenannte U-D-Ketten gebildet, wobei Ketten von Baumstrukturen gebildet werden, indem definierte Funktionsgrößen durch ihre Definition ersetzt werden. Eine solche Kette 46 ist in Fig. 6a abgebildet. Der entsprechende Steuergeräteprogrammcode ist in Fig. 6b abgebildet. Offensichtlich ist der Code aus Fig. 6b deutlich kürzer als der Code aus Fig. 5b. Es ist somit ersichtlich, dass die Vorhersage über einen benötigten Speicherplatzbedarf davon abhängt, auf Basis welcher Programmcoderepräsentation die Aussage getroffen wird. Der Anwender des Verfahrens kann in einer bevorzugten Ausführungsform entscheiden, ob die Abschätzung auf einer Repräsentationsebene durchgeführt werden soll, die dem Steuergeräteprogrammcode schon sehr nahe kommt oder ob eine besonders schnelle Abschätzung auf einer höheren Programmcoderepräsentation basieren soll.

## Patentansprüche

1. Verfahren zur Abschätzung eines Ressourcenverbrauchs an Speicherplatz und/oder an benötigter Laufzeit eines zu erzeugenden Steuergeräteprogrammcodes für ein Steuerungsprogramm,
wobei die Funktionalität des Steuerungsprogramms in einem mit einer Modellierungssoftware erstellten ausführbaren Modell (10, 10') vorgegeben ist, wobei das Modell (10, 10')
eine Funktion (20, 20', 21) mit einer Anzahl von ersten Funktionsgrößen (InPort, In-Port1, InPort2, OutPort) und ersten den ersten Funktionsgrößen zugeordneten Informationen aufweist und
Optimierungsparameter (O1, O2, On) zur Festlegung von Optimierungseinstellungen für einen Codegenerator umfasst,
wobei für einen die Funktion (20, 20', 21) umfassenden Teil des Modells von dem Codegenerator unter Berücksichtigung erster Werte der Optimierungsparameter (O1, O2, On) eine erste Programmcoderepräsentation (40, 43, 44) erzeugt wird,
wobei die erste Programmcoderepräsentation (40, 43, 44) eine Anzahl von zweiten Funktionsgrößen (InPort, InPort1, InPort2, g1, g2, s1, sw) und den zweiten Funktionsgrößen zugeordnete Informationen aufweist,
wobei eine Abschätzeinheit (30) vorgesehen ist, die ein Ressourcenmodell (50) mit einer Anzahl von Hardware beschreibenden Parametern (R1, R2, Rn) umfasst,
wobei von der Abschätzeinheit (30)
unter Berücksichtigung der Hardware beschreibenden Parameter (R1, R2, Rn) ein erster Speicherplatzbedarf-Schätzwert für den Steuergeräteprogrammcode und/oder
ein erster Laufzeit-Schätzwert für den Steuergeräteprogrammcode ermittelt wird und der erste Speicherplatzbedarf-Schätzwert und/oder der erste Laufzeit-Schätzwert in einem ersten Speicherbereich abgespeichert und/oder auf einer Anzeigevorrichtung (60), insbesondere in dem ausführbaren Modell (10, 10'), angezeigt werden/wird,
**dadurch gekennzeichnet, dass** der Codegenerator nicht den vollständigen Prozess der Codegenerierung für den Steuergeräteprogrammcode durchläuft, sondern nur die erste Programmcoderepräsentation erzeugt, welche als Kontrollflussgraph und/oder als Datenflussgraph und/oder als Baumstruktur ausgeprägt ist, und dass der erste Speicherplatzbedarf-Schätzwert und/oder der erste Laufzeit-Schätzwert basierend auf der ersten Programmcoderepräsentation (43, 44) ermittelt werden/wird.

2. Verfahren nach Anspruch 1, **dadurch gekennzeichnet, dass** mindestens eine Bedingung bezüglich des Ressourcenverbrauchs vorgegeben wird, und dass von der Abschätzeinheit (30) in Abhängigkeit des erstes Speicherplatzbedarf-Schätzwerts und/oder in Abhängigkeit des ersten Laufzeit-Schätzwertes und anhand der vorgegebenen Bedingung abgeschätzt wird, ob der zu erzeugende Steuergeräteprogrammcode die vorgegebene Bedingung erfüllt und dass von der Abschätzeinheit gemäß dem Ergebnis der Abschätzung angezeigt wird, dass der zu erzeugende Steuergeräteprogrammcode die vorgegebene Bedingung erfüllt oder angezeigt wird, dass der zu erzeugende Steuergeräteprogrammcode die vorgegebene Bedingung nicht erfüllt.

3. Verfahren nach Anspruch 1 oder 2, wobei unter Berücksichtigung von zweiten den ersten Funktionsgrößen zugeordneten Informationen und/oder unter Berücksichtigung zweiter Werte der Optimierungsparameter (O'1, O'2, O'm) eine zweite Programmcoderepräsentation (43, 44) erzeugt wird und wobei basierend auf der zweiten Programmcoderepräsentation (43, 44) und/oder unter Berücksichtigung von zweiten Werten der Hardware beschreibenden Parameter (R'1, R'2, R'm) für den Steuergeräteprogrammcode ein zweiter Speicherplatzbedarf-Schätzwert und/oder ein zweiter Laufzeit-Schätzwert ermittelt wird und wobei der zweite Speicherplatzbedarf-Schätzwert und/oder der zweite Laufzeit-Schätzwert in einem zweiten Speicherbereich abgespeichert und/oder auf einer Anzeigevorrichtung (60), insbesondere in dem ausführbaren Modell (10, 10'), angezeigt werden/wird.

4. Verfahren nach Anspruch 3, **dadurch gekennzeichnet, dass** von der Abschätzeinheit (30) in Abhängigkeit des erstes Speicherplatzbedarf-Schätzwerts und/oder des zweiten Speicherplatzbedarf-Schätzwerts und/oder in Abhängigkeit des ersten Laufzeit-Schätzwertes und/oder des zweiten Laufzeit-Schätzwerts und anhand einer vorgegebenen Bedingung bezüglich des Ressourcenverbrauchs eine Entscheidung getroffen wird, dass der Steuergeräteprogrammcode mittels des Codegenerators entweder unter Berücksichtigung der ersten den ersten Funktionsgrößen zugeordneten Informationen oder unter Berücksichtigung der zweiten den ersten Funktionsgrößen zugeordneten Informationen und/oder unter Berücksichtigung der ersten Werte der Optimierungsparameter (O1, O2, On) oder unter Berücksichtigung der zweiten Werte der Optimierungsparameter (O'1, O'2, O'm) erzeugt wird.

5. Verfahren nach Anspruch 4, **dadurch gekennzeichnet, dass** von der Abschätzeinheit für die Entscheidung ein Vergleich des ersten Speicherplatzbedarf-Schätzwertes mit dem zweiten Speicherplatzbedarf-Schätzwert und/oder ein Vergleich des ersten Laufzeit-Schätzwertes mit dem zweiten Laufzeit-Schätzwert vorgenommen wird.

6. Verfahren nach Anspruch 4 oder 5, **dadurch gekennzeichnet, dass** die Bedingung bezüglich des Ressourcenverbrauchs durch einen Wert eines Hardware beschreibenden Parameters und/oder durch einen Wert eines Optimierungsparameters gegeben ist, wobei durch den Hardware beschreibenden Parameter und/oder den Optimierungsparameter festgelegt wird, dass der Steuergeräteprogrammcode eine obere Schranke für den Speicherplatzbedarf des Steuergeräteprogrammcodes oder eine obere Schranke für die Laufzeit des Steuergeräteprogrammcodes nicht überschreiten darf und/oder dass der Steuergeräteprogrammcode bezüglich des Speicherplatzbedarfs oder bezüglich der Laufzeit zu optimieren ist.

7. Verfahren nach einem der vorherigen Ansprüche, **dadurch gekennzeichnet, dass** die Hardware beschreibenden Parameter (R1, R2, Rn, R'1, R'2, R'n) dem ausführbaren Modell (10, 10') oder dem die Funktion (20, 20', 21) umfassenden Teil des ausführbaren Modells (10, 10') zugeordnet werden.

8. Verfahren nach einem der vorherigen Ansprüche, **dadurch gekennzeichnet, dass** der Funktion (20, 20', 21) ein Optimierungsparameter (O1, O2, On) als Funktionsoptimierungsparameter zugeordnet wird und dass in Abhängigkeit des Wertes des Funktionsoptimierungsparameters Programmanweisungen für die Funktion (20, 20', 21) unmittelbar in den Steuergeräteprogrammcode eingebunden oder mittels eines Unterprogrammaufrufs in den Steuergeräteprogrammcode eingebunden werden.

9. Verfahren nach einem der vorherigen Ansprüche, **dadurch gekennzeichnet, dass** ein dritter Speicherplatzbedarf-Schätzwert und/oder ein dritter Laufzeit-Schätzwert in Abhängigkeit einer dritten Programmcoderepräsentation (45, 46) ermittelt wird, wobei die dritte Programmcoderepräsentation (45, 46) durch Transformation aus der ersten Programmcoderepräsentation (43, 44) oder aus der zweiten Programmcoderepräsentation (43, 44) erzeugt wird.

10. Verfahren nach einem der vorherigen Ansprüche, **dadurch gekennzeichnet, dass** von der Abschätzeinheit (30) in Abhängigkeit der vorgegebenen Bedingung und basierend auf der Anzahl der zweiten Funktionsgrößen (InPort, InPort1, InPort2, g1, g2, s1, sw) und/oder basierend auf den zweiten Funktionsgrößen zugeordneten Informationen ein Vorschlag zur Änderung der Werte der Optimierungsparameter (O1, O2, On) des Steuerungsprogramms ermittelt und dem Benutzer des ausführbaren Modells (10, 10') angezeigt wird.

11. Verfahren nach Anspruch 10, **dadurch gekennzeichnet, dass** der Vorschlag eine Änderung der Werte des Funktionsoptimierungsparameters umfasst.

12. Verfahren nach einem der vorherigen Ansprüche, **dadurch gekennzeichnet, dass** der Wert eines Hardware beschreibenden Parameters (R1, R2, Rn) durch den Wert einer Registerbreite eines Prozessors oder die Anzahl der Datenregister des Prozessors oder einen Gewichtungsfaktor für die Anzahl der erforderlichen Prozessortakte für die Durchführung einer Rechenoperation durch den Prozessor gegeben ist.

13. Verfahren nach einem der vorherigen Ansprüche, **dadurch gekennzeichnet, dass** die den ersten Funktionsgrößen zugeordneten Informationen und/oder die den zweiten Funktionsgrößen zugeordneten Informationen Informationen zum Typ der Funktionsvariablen umfassen und/oder Informationen umfassen, die festlegen, dass der Wert einer Funktionsgröße während der Laufzeit des Steuergeräteprogrammcodes ausgelesen wird oder nicht ausgelesen wird.

14. Verfahren nach Anspruch 9 , **dadurch gekennzeichnet, dass** von der Abschätzeinheit (30) der erste Speicherplatzbedarf-Schätzwert aus dem Wert für den benötigten Speicherplatz für die in der ersten Programmcoderepräsentation (43, 44) aufgeführten zweiten Funktionsgrößen (InPort, InPort1, InPort2, g1, g2, s1, sw) und/oder aus dem Wert für den benötigten Speicherplatz für die in der zweiten Programmcoderepräsentation (43, 44) aufgeführten Funktionsgrößen (InPort, InPort1, InPort2, g1, g2, s1, sw) und/oder aus dem Wert für den benötigten Speicherplatz für die in der dritten Programmcoderepräsentation (45, 46) aufgeführten Funktionsgrößen (InPort, InPort1, InPort2, g1, g2, s1, sw) ermittelt wird.

15. Verfahren nach einem der vorherigen Ansprüche, **dadurch gekennzeichnet, dass** durch den ersten Speicherplatzbedarf-Schätzwert eine Abschätzung für den Speicherplatzbedarf in einem RAM-Speicher oder in einem ROM-Speicher oder in einem Stapelspeicher angegeben wird.

16. Verfahren nach Anspruch 12, **dadurch gekennzeichnet, dass** der erste Laufzeit-Schätzwert von der Abschätzeinheit (30) durch Abschätzung der Anzahl der benötigten Prozessortakte mittels des Gewichtungsfaktors bestimmt wird.

## Claims

1. A method for assessing memory resource consumption and/or required run time of a controller program code for a control program,
the functionality of the control program being provided in an executable model (10, 10') created by means of a modeling software, the model comprising
a function (20, 20', 21) having a plurality of first function parameters (InPort, InPort1, InPort2, OutPort) and first information associated with the first function parameters, and optimization parameters (O1, 02, On) for defining optimization settings for a code generator,
a first program code representation (40, 43, 44) being generated by the code generator for a part of the model comprising the function (20, 20', 21) based on first values of the optimization parameters (O1, 02, On),
the first program code representation (40, 43, 44) comprising a plurality of second function parameters (InPort, InPort1, InPort2, g1, g2, s1, sw) and information associated with the second function parameters,
an estimating unit (30) being provided comprising a resource model (50) having a plurality of parameters describing hardware (R1, R2, Rn),
the estimating unit (30) determining on the basis of the parameters (R1, R2, Rn) describing the hardware
a first memory space requirement estimate for the controller program code and/or
a first running time estimate for the controller program code, and
the first memory space requirement estimate and/or the first running time estimate being saved in a first memory area and/or being displayed on a display device (60), particularly in the executable model (10, 10'),
**characterized in that** the code generator does not run through the entire process of code generating for the controller program code, but rather generates only the first program code representation as a control flow diagram and/or as a data flow graph and/or as a tree structure, and that the first memory space requirement estimate and/or the first running time estimate is/are determined on the basis of the first program code representation (43, 44).

2. The method according to claim 1, **characterized in that** at least one condition relating to resource consumption is defined and that the estimating unit (30) estimates, depending on the first memory space requirement estimate and/or depending on the first running time estimate and using the defined condition, whether the controller program code to be generated meets the defined condition, and that, based on the result of the estimate, the estimating unit displays that the control device program code meets the defined condition or that the control device program code does not meet the defined condition.

3. The method according to claim 1 or 2, a second program code representation (43, 44) being generated by applying second information associated with the first function parameters and/or by applying second values of the optimization parameters (O'1, O'2, O'm), and a second memory space requirement estimate and/or a second running time estimate being determined based on the second program code representation (43, 44) and/or by applying second values of the parameters (R'1, R'2, R'm) describing hardware, and the second memory space requirement estimate and/or the second running time estimate being saved in a second memory area and/or displayed on a display device (60), particularly in the executable model (10, 10').

4. The method according to claim 3, **characterized in that** a decision is made by the estimating unit (30), depending on the first memory space requirement estimate and/or the second memory space requirement estimate and/or depending on the first running time estimate and/or the second running time estimate, and using a defined condition relating to resource consumption, that the control device program code is generated by means of the code generator either by applying the first information associated with the first function parameters or by applying the second information associated with the first function parameters and/or by applying the first values of the optimization parameters (O1, 02, On) or by applying the second values of the optimization parameters (O'1, O'2, O'm).

5. The method according to claim 4, **characterized in that** a comparison of the first memory space requirement estimate with the second memory space requirement estimate and/or a comparison of the first running time estimate with the second running time estimate is made by the estimating unit for the decision.

6. The method according to claim 4 or 5, **characterized in that** the condition relating to resource consumption is defined by a value of a parameter describing hardware and/or by a value of an optimization parameter, the parameter describing hardware and/or the optimization parameter defining that the control device program code may not exceed an upper threshold for the memory space requirements of the control device program code or an upper threshold for the running time of the control device program code, and/or that the control device program code shall be optimized with respect to the memory space requirement or with respect to the running time.

7. The method according to any one of the preceding claims, **characterized in that** the parameters (R1, R2, Rn, R'1, R'2, R'n) describing hardware are associated with the executable model (10, 10') or the part of the executable model (10, 10') comprising the function (20, 20', 21).

8. The method according to any one of the preceding claims, **characterized in that** an optimization parameter (O1, 02, On) is associated with the function (20, 20', 21) as a function optimization parameter and that depending on the value of the function optimization parameter program instructions for the function (20, 20', 21) are incorporated directly in the control device program code or are incorporated in the control device program code by means of a subroutine call.

9. The method according to any one of the preceding claims, **characterized in that** a third memory space requirement estimate and/or a third running time estimate is determined depending on a third program code representation (45, 46), wherein the third program code representation (45, 46) is generated by means of transformation from the first program code representation (43, 44) or from the second program code representation (43, 44).

10. The method according to any one of the preceding claims, **characterized in that** a suggestion for modifying the values of the optimization parameters (O1, 02, On) of the control program is determined by the estimating unit (30) depending on the defined condition and based on the quantity of the second function parameters (InPort, InPort1, InPort2, g1, g2, s1, sw) and/or based on the information associated with the second function parameter and said suggestion is displayed to the user of the executable model (10, 10').

11. The method according to claim 10, **characterized in that** the suggestion comprises a change of the values of the function optimization parameter.

12. The method according to any one of the preceding claims, **characterized in that** the value of a parameter (R1, R2, Rn) describing hardware is provided by the value of a register width of a processor or the quantity of the data registers of the processor or a weighting factor for the quantity of the required processor cycles for the processor performing a calculation operation.

13. The method according to any one of the preceding claims, **characterized in that** the information associated with the first function parameters and/or the information associated with the second function parameters comprise information about the type of the function variables and/or comprise information defining that the value of a function parameter is read out or is not read out during the running time of the control device program code.

14. The method according to claim 9, **characterized in that** the estimating unit (30) determines the first memory space requirement estimate from the value for the memory space requirement for the second function parameters (InPort, InPort1, InPort2, g1, g2, s1, sw) listed in the first program code representation (43, 44) and/or from the value for the memory space requirement for the function parameters (InPort, InPort1, InPort2, g1, g2, s1, sw) listed in the second program code representation (43, 44) and/or from the value for the memory space requirement for the function parameters (InPort, InPort1, InPort2, g1, g2, s1, sw) listed in the third program code representation (45, 46).

15. The method according to any one of the preceding claims, **characterized in that** an estimate for the memory space requirement in a RAM memory or in a ROM memory or in a stack memory is indicated by the first memory space requirement estimate.

16. The method according to claim 12, **characterized in that** the first running time estimate is determined by the estimating unit (30) by estimating the quantity of processor cycles required by means of the weighting factor.

## Revendications

1. Procédé d'estimation d'une consommation de ressources en matière d'espace mémoire et/ou de temps d'exécution nécessaire d'un code de programme de contrôleur à générer pour un programme de commande,
la fonctionnalité du programme de commande étant prédéfinie dans un modèle (10, 10') exécutable créé avec un logiciel de modélisation, le modèle (10, 10')
possédant une fonction (20, 20', 21) avec une pluralité de premières grandeurs de fonction (InPort, InPort1, InPort2, OutPort) et des premières informations associées au grandeurs de fonction et
comprenant des paramètres d'optimisation (O1, O2, On) servant à définir des réglages d'optimisation pour un générateur de code,
une première représentation du code de programme (40, 43, 44) étant générée par le générateur de code pour une partie du modèle incluant la fonction (20, 20', 21) en tenant compte des premières valeurs des paramètres d'optimisation (O1, O2, On),
la première représentation du code de programme (40, 43, 44) possédant une pluralité de deuxièmes grandeurs de fonction (InPort, InPort1, InPort2, g1, g2, s1, sw) et des informations associées aux deuxièmes grandeurs de fonction,
une unité d'estimation (30) étant présente, laquelle comprend un modèle de ressource (50) avec une pluralité de paramètres de description du matériel (R1, R2, Rn),
l'unité d'estimation (30) déterminant en tenant compte des paramètres de description du matériel (R1, R2, Rn)
une première valeur estimée de besoin en espace mémoire pour le code de programme de contrôleur et/ou
une première valeur estimée de temps d'exécution pour le code de programme de contrôleur et
mettant en mémoire la première valeur estimée de besoin en espace mémoire et/ou la première valeur estimée de temps d'exécution dans une première zone de mémoire et/ou la/les affichant sur un dispositif d'affichage (60), notamment dans le modèle exécutable (10, 10'),
**caractérisé en ce que** le générateur de code ne parcourt par la totalité du processus de génération de code pour le code de programme de contrôleur, mais ne génère que la première représentation du code de programme, laquelle est caractérisée en tant que graphe de flux de contrôle et/ou en tant que graphe de flux de données et/ou en tant que structure en arborescence, et **en ce que** la première valeur estimée de besoin en espace mémoire et/ou la première valeur estimée de temps d'exécution est/sont déterminée(s) en se basant sur la première représentation du code de programme (43, 44).

2. Procédé selon la revendication 1, **caractérisé en ce qu'**au moins une condition relative à la consommation de ressources est prédéfinie, et **en ce que** l'unité d'estimation (30), en fonction de la première valeur estimée de besoin en espace mémoire et/ou en fonction de la première valeur estimée de temps d'exécution et à l'aide de la condition prédéfinie, estime si le code de programme de contrôleur à générer satisfait à la condition prédéfinie, et **en ce que** l'unité d'estimation, conformément au résultat de l'estimation, indique que le code de programme de contrôleur à générer satisfait à la condition prédéfinie ou indique que le code de programme de contrôleur à générer ne satisfait pas à la condition prédéfinie.

3. Procédé selon la revendication 1 ou 2, selon lequel une deuxième représentation du code de programme (43, 44) est générée en tenant compte de deuxièmes informations associées aux premières grandeurs de fonction et/ou en tenant compte de deuxièmes valeurs des paramètres d'optimisation (O'1, O'2, O'm) et, en se basant sur la deuxième représentation du code de programme (43, 44) et/ou en tenant compte de deuxièmes valeurs des paramètres de description du matériel (R' 1, R' 2, R'm), une deuxième valeur estimée de besoin en espace mémoire et/ou une deuxième valeur estimée de temps d'exécution est/sont déterminée(s) pour le code de programme de contrôleur, et la deuxième valeur estimée de besoin en espace mémoire et/ou la deuxième valeur estimée de temps d'exécution est/sont mise(s) en mémoire dans une deuxième zone de mémoire et/ou affichée(s) sur un dispositif d'affichage (60), notamment dans le modèle exécutable (10, 10').

4. Procédé selon la revendication 3, **caractérisé en ce qu'**une décision est prise par l'unité d'estimation (30) concernant la consommation des ressources en fonction de la première valeur estimée de besoin en espace mémoire et/ou de la deuxième valeur estimée de besoin en espace mémoire et/ou en fonction de la première valeur estimée de temps d'exécution et/ou de la deuxième valeur estimée de temps d'exécution et à l'aide d'une condition prédéfinie, décision selon laquelle le code de programme de contrôleur est généré au moyen du générateur de code soit en tenant compte des premières informations associées aux premières grandeurs de fonction, soit en tenant compte des deuxièmes informations associées aux premières grandeurs de fonction et/ou en tenant compte des premières valeurs des paramètres d'optimisation (O1, O2, On) ou en tenant compte des deuxièmes valeurs des paramètres d'optimisation (O'1, O'2, O'm).

5. Procédé selon la revendication 4, **caractérisé en ce que** pour prendre la décision, l'unité d'estimation effectue une comparaison de la première valeur estimée de besoin en espace mémoire avec la deuxième valeur estimée de besoin en espace mémoire et/ou une comparaison de la première valeur estimée de temps d'exécution avec la deuxième valeur estimée de temps d'exécution.

6. Procédé selon la revendication 4 ou 5, **caractérisé en ce que** la condition concernant la consommation des ressources est donnée par une valeur d'un paramètre de description du matériel et/ou par une valeur d'un paramètre d'optimisation, le paramètre de description du matériel et/ou le un paramètre d'optimisation permettant de définir que le code de programme de contrôleur ne doit pas dépasser une limite supérieure pour le besoin en espace mémoire du code de programme de contrôleur ou une limite supérieure pour le temps d'exécution du code de programme de contrôleur et/ou que le code de programme de contrôleur est à optimiser du point de vue du besoin en espace mémoire ou du point de vue du temps d'exécution.

7. Procédé selon l'une des revendications précédentes, **caractérisé en ce que** les paramètres de description du matériel (R1, R2, Rn, R'1, R' 2, R'n) sont associés au modèle exécutable (10, 10') ou à la partie du modèle exécutable (10, 10') comprenant la fonction (20, 20', 21).

8. Procédé selon l'une des revendications précédentes, **caractérisé en ce qu'**un paramètre d'optimisation (O1, O2, On) est associé à la fonction (20, 20', 21) en tant que paramètre d'optimisation de fonction et **en ce qu'**en fonction de la valeur du paramètre d'optimisation de fonction, les instructions de programme pour la fonction (20, 20', 21) sont intégrées directement dans le code de programme de contrôleur ou sont intégrées dans le code de programme de contrôleur au moyen de l'appel d'un sous-programme.

9. Procédé selon l'une des revendications précédentes, **caractérisé en ce qu'**une troisième valeur estimée de besoin en espace mémoire et/ou une troisième valeur estimée de temps d'exécution est/sont déterminée(s) en fonction d'une troisième représentation du code de programme (45, 46), la troisième représentation du code de programme (45, 46) étant générée par transformation à partir de la première représentation du code de programme (43, 44) ou à partir de la deuxième représentation du code de programme (43, 44).

10. Procédé selon l'une des revendications précédentes, **caractérisé en ce que** l'unité d'estimation (30), en fonction de la condition prédéfinie et en se basant sur le nombre de deuxièmes grandeurs de fonction (InPort, InPort1, InPort2, g1, g2, s1, sw) et/ou en se basant sur les informations associées aux deuxièmes grandeurs de fonction, détermine une proposition de modification des valeurs des paramètres d'optimisation (O1, O2, On) du programme de commande et l'affiche à l'attention de l'utilisateur du modèle exécutable (10, 10').

11. Procédé selon la revendication 10, **caractérisé en ce que** la proposition comprend une modification des valeurs du paramètre d'optimisation de fonction.

12. Procédé selon l'une des revendications précédentes, **caractérisé en ce que** la valeur d'un paramètre de description du matériel (R1, R2, Rn) est donnée par la valeur d'une largeur de registre d'un processeur ou le nombre de registres de données du processeur ou un facteur de pondération pour le nombre de cycles de processeur nécessaires à l'exécution d'une opération de calcul par le processeur.

13. Procédé selon l'une des revendications précédentes, **caractérisé en ce que** les informations associées aux premières grandeurs de fonction et/ou les informations associées aux deuxièmes grandeurs de fonction comprennent des informations à propos du type de variables de fonction et/ou comprennent des informations qui définissent que la valeur d'une grandeur de fonction est lue ou n'est pas lue pendant le temps d'exécution du code de programme de contrôleur.

14. Procédé selon la revendication 9 , **caractérisé en ce que** l'unité d'estimation (30) détermine la première valeur estimée de besoin en espace mémoire à partir de la valeur de l'espace mémoire nécessaire pour les deuxièmes grandeurs de fonction (InPort, InPort1, InPort2, g1, g2, s1, sw) mentionnées dans la première représentation du code de programme (43, 44) et/ou à partir de la valeur de l'espace mémoire nécessaire pour les grandeurs de fonction (InPort, InPort1, InPort2, g1, g2, s1, sw) mentionnées dans la deuxième représentation du code de programme (43, 44) et/ou à partir de la valeur de l'espace mémoire nécessaire pour les grandeurs de fonction (InPort, InPort1, InPort2, g1, g2, s1, sw) mentionnées dans la troisième représentation du code de programme (45, 46).

15. Procédé selon l'une des revendications précédentes, **caractérisé en ce qu'**une estimation du besoin en espace mémoire dans une mémoire RAM ou dans une mémoire ROM ou dans une pile de mémoire est indiquée par la première valeur estimée du besoin en espace mémoire.

16. Procédé selon la revendication 12, **caractérisé en ce que** la première valeur estimée du temps d'exécution est déterminée par l'unité d'estimation (30) en estimant le nombre de cycles de processeur au moyen du facteur de pondération.
